# EUROPEAN PATENT APPLICATION

(11) **EP 4 760 623 A1**
(43) Date of publication of application: **17.06.2026**
(21) Application number: 24851825.0
(22) Date of filing: 06.08.2024
(51) Int. Cl.: G06Q 50/04

(54) **ENERGY MANAGEMENT SYSTEM, ENERGY MANAGEMENT METHOD, AND ENERGY MANAGEMENT PROGRAM**

(30) Priority: 07.08.2023 JP 2023128708
(71) Applicant: HORIBA, Ltd., Kyoto-shi Kyoto 601-8510 (JP)
(72) Inventor: IWAO, Keijiro, Kyoto-shi, Kyoto 601-8510 (JP); KAKINO, Toru, Kyoto-shi, Kyoto 601-8510 (JP); ISHIKUMA, Toru, Kyoto-shi, Kyoto 601-8510 (JP)
(74) Representative: Müller Hoffmann & Partner
(86) International application number: PCT/JP2024/027995
(87) International publication number: WO 2025/033401

(57) **Abstract**

The present invention realizes energy saving by focusing on a frequency distribution indicating frequency of an energy consumption amount in an energy demand facility, and is an energy management system that manages consumed energy in the energy demand facility. The energy management system includes: a clustering unit that clusters a past energy consumption amount of the energy demand facility into a plurality of clusters based on a predetermined condition; a modeling unit that models a frequency distribution indicating frequency of the energy consumption amount in each cluster into at least one distribution having a positive skewness; and a schedule adjustment unit that adjusts an operation schedule of the energy demand facility so as to reduce dispersion of the modeled distribution.

## Description

### Technical Field

The present invention relates to an energy management system, an energy management method, and an energy management program.

### Background Art

Conventionally, for the purpose of energy saving in energy demand facilities such as factory facilities, test facilities, and air conditioning facilities, energy management systems for managing them have been considered.

For example, Patent Literature 1 discloses an energy use amount visualization device capable of grasping whether waste of energy has occurred, specifying a cause of the occurrence, and analyzing a tendency along production flow of a production line.

In addition, Non Patent Literature 1 discloses an idea of modeling power demand by using consumed power data such as consumed power in the presence or absence of a person, consumed power in the presence or absence of a test, and consumption demand on weekdays or holidays.

### Citation List

### Patent Literature

Patent Literature 1: JP 2013-222256 A

### Non Patent Literature

Non Patent Literature 1: MORI, Yuki, and five others, "Short-term Electricity Demand Forecasting for a Laboratory with Non-periodic Electricity Demand Fluctuations", The International Council on Electrical Engineering (ICEE) Conference 2023, issued on July 2, 2023

### Summary of Invention

### Technical Problem

By the way, the inventors of the present application have focused on the fact that a frequency distribution indicating frequency of an energy consumption amount in an energy demand facility does not follow a normal distribution and is indicated by a distribution having a positive skewness, a combination of a plurality of distributions having positive skewnesses, or the like.

Then, the inventors of the present application consider that by reducing dispersion in the frequency distribution, an average value of consumed energy in the energy demand facility can be reduced, and furthermore, energy saving in the energy demand facility can be realized.

Therefore, the present invention has been made in view of the above-described problems, and a main object thereof is to realize energy saving by focusing on a frequency distribution indicating frequency of an energy consumption amount in an energy demand facility. Solution to Problem

That is, an energy management system according to the present invention is an energy management system that manages consumed energy in an energy demand facility, and includes: a clustering unit that clusters a past energy consumption amount of the energy demand facility into a plurality of clusters based on a predetermined condition; a modeling unit that models a frequency distribution indicating frequency of the energy consumption amount in each cluster into at least one distribution having a positive skewness; and a schedule adjustment unit that adjusts an operation schedule of the energy demand facility so as to reduce dispersion of the modeled distribution.

In such an energy management system, the frequency distribution indicating the frequency of the energy consumption amount in each cluster is modeled into the at least one distribution having a positive skewness, and the operation schedule of the energy demand facility is adjusted so as to reduce the dispersion of the modeled distribution, so that an average value of consumed energy in the energy demand facility can be reduced. As a result, energy saving in the energy demand facility can be realized.

As a specific embodiment of the clustering unit, it is desirable that the clustering unit clusters the past energy consumption amount into the plurality of clusters by dividing the past energy consumption amount for each predetermined unit period.

Here, it is conceivable that the energy demand facility includes a plurality of energy consumption devices. In order to efficiently realize energy saving in the energy demand facility, it is desirable that the schedule adjustment unit adjusts an operation schedule of each of the plurality of energy consumption devices.

Specifically, it is desirable that the energy demand facility includes a cooling facility, and the schedule adjustment unit adjusts an operation schedule of the cooling facility using a psychrometric chart.

With this configuration, it is possible to reduce the dispersion of the distribution having a positive skewness modeled by the modeling unit.

In order to further realize energy saving in the energy demand facility, it is desirable that the schedule adjustment unit predicts a load of the cooling facility and adjusts the operation schedule of the cooling facility using the psychrometric chart.

As a specific embodiment of the distribution having a positive skewness, it is conceivable that the distribution having a positive skewness includes a power-law distribution having a median value smaller than an average value.

Further, an energy management method according to the present invention is an energy management method for managing consumed energy in an energy demand facility, and includes: clustering a past energy consumption amount of the energy demand facility into a plurality of clusters based on a predetermined condition; modeling a frequency distribution indicating frequency of the energy consumption amount in each cluster into at least one distribution having a positive skewness; and adjusting an operation schedule of the energy demand facility so as to reduce dispersion of the modeled distribution.

Furthermore, an energy management program according to the present invention is an energy management program for managing consumed energy in an energy demand facility, and causes a computer to include: a function as a clustering unit that clusters a past energy consumption amount of the energy demand facility into a plurality of clusters based on a predetermined condition; a function as a modeling unit that models a frequency distribution indicating frequency of the energy consumption amount in each cluster into at least one distribution having a positive skewness; and a function as a schedule adjustment unit that adjusts an operation schedule of the energy demand facility so as to reduce dispersion of the modeled distribution.

Note that the energy management program may be distributed electronically or may be recorded in a program recording medium such as a CD, a DVD, or a flash memory. Advantageous Effects of Invention

According to the present invention described above, energy saving can be realized by focusing on a frequency distribution indicating frequency of an energy consumption amount in an energy demand facility.

### Brief Description of Drawings

FIG. 1 is an overall schematic diagram of an energy management system according to an embodiment of the present invention.
FIG. 2 is data (histogram by consumption amount) obtained by clustering a past energy consumption amount.
FIG. 3 is a diagram illustrating a distribution having a positive skewness obtained by modeling a frequency distribution of an energy consumption amount at a certain time.
FIG. 4 is a schematic diagram illustrating a distribution obtained by modeling a frequency distribution of an energy consumption amount before schedule adjustment, and a distribution obtained by modeling a frequency distribution of an energy consumption amount before the schedule adjustment.
FIG. 5 is a diagram illustrating an example in which a distribution having a positive skewness is subjected to factor separation.
FIG. 6 is a diagram illustrating a screen display example of a display according to a modified embodiment.
FIG. 7 is a diagram illustrating a screen display example of the display according to a modified embodiment.
FIG. 8 is a diagram illustrating a screen display example of the display according to a modified embodiment.
FIG. 9 is a diagram illustrating a screen display example of the display according to a modified embodiment.
FIG. 10 is a diagram illustrating a screen display example of the display according to a modified embodiment.

### Description of Embodiments

### <One embodiment of the present invention>

Hereinafter, an embodiment of an energy management system according to the present invention will be described with reference to the drawings.

Note that any of the drawings shown below is schematically illustrated with appropriate omissions or exaggerations for easy understanding. The same components are denoted by the same reference signs, and the description thereof will be omitted as appropriate.

### <Configuration of energy management system 100>

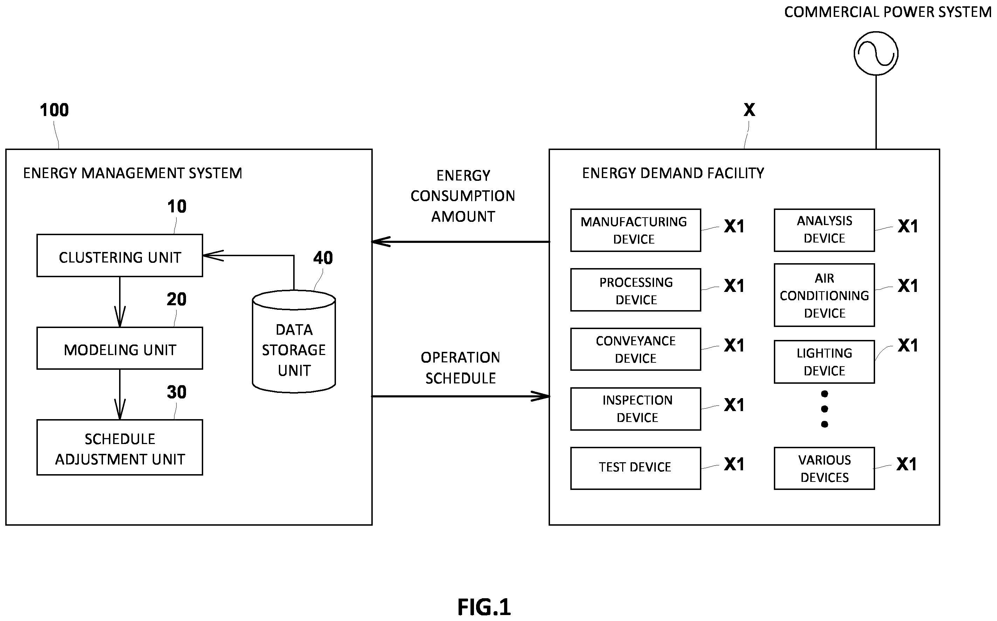

As illustrated in FIG. 1, an energy management system 100 of the present embodiment manages consumed energy in an energy demand facility X such as a factory facility, a test facility, or an air conditioning facility.

Here, the energy demand facility X includes a plurality of energy consumption devices X1. Examples of the energy consumption device X1 include various devices such as a manufacturing device, a processing device, a conveyance device, an inspection device, a test device, an analysis device, an air conditioning device, and a lighting device.

In the present embodiment, energy consumed by the energy demand facility X is electric power, but may be secondary energy other than electric power, such as city gas, propane gas, gasoline, kerosene, and light oil, or may be primary energy such as oil, coal, wind power, natural gas, hydroelectric power, and geothermal heat.

Specifically, as illustrated in FIG. 1, the energy management system 100 includes a clustering unit 10 that clusters a past energy consumption amount of the energy demand facility X into a plurality of clusters based on a predetermined condition, a modeling unit 20 that models a frequency distribution indicating frequency of an energy consumption amount in each cluster into at least one distribution having a positive skewness, and a schedule adjustment unit 30 that adjusts an operation schedule of the energy demand facility X so as to reduce dispersion of the modeled distribution.

Note that the energy management system 100 is configured by a computer including a CPU, a memory, an input/output interface, an AD converter, a display device such as a display, and the like. Then, the energy management system 100 exerts functions of the above-described respective units by cooperation of the CPU and the peripheral devices based on an energy management program stored in the memory. Note that the energy management system 100 may be configured by a physically integrated computer or may be configured by a physically separate computer.

Each of the units 10 to 30 will be described below.

The clustering unit 10 clusters a past energy consumption amount of the energy demand facility X into a plurality of clusters based on a predetermined condition. Here, the past energy consumption amount of the energy demand facility X is, for example, time-series data of an energy consumption amount in the past one year. The time-series data of the energy consumption amount is measured by, for example, a power meter, and can be stored in a data storage unit 40 of the energy management system 100.

The clustering unit 10 of the present embodiment clusters the past energy consumption amount into the plurality of clusters by dividing the past energy consumption amount for each predetermined unit period.

Here, as the predetermined period, for example, a time such as one hour or two hours, for example, the number of days such as one day or two days, or for example, a week such as one week or two weeks is considered.

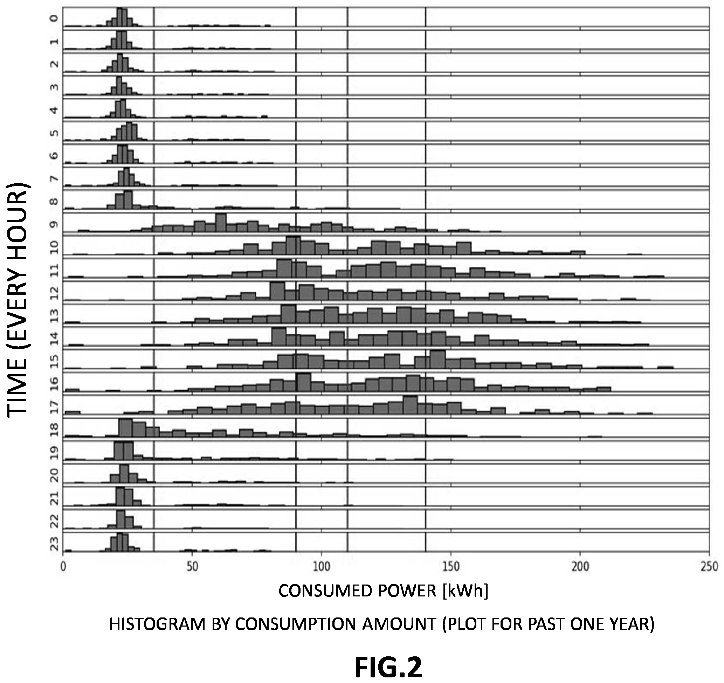

FIG. 2 illustrates a histogram by a consumption amount (frequency distribution) obtained by plotting time-series data of the energy consumption amount for the past one year in a graph in which a vertical axis is time (every hour) and a horizontal axis is an energy consumption amount (consumed power [kWh]). Here, the horizontal axis corresponding to each time indicates counts (frequency) of an energy consumption amount at the time. In this manner, the clustering unit 10 clusters the energy consumption amount in the past one year into 24 clusters of 0:00, 1:00,... and 23:00. Information (for example, frequency distribution) clustered by the clustering unit 10 can be displayed on the display device such as the display.

The modeling unit 20 models a frequency distribution indicating frequency of an energy consumption amount in the cluster into at least one distribution having a positive skewness. Examples of the distribution having a positive skewness modeled by the modeling unit 20 of the present embodiment include a power-law distribution having a median value smaller than an average value.

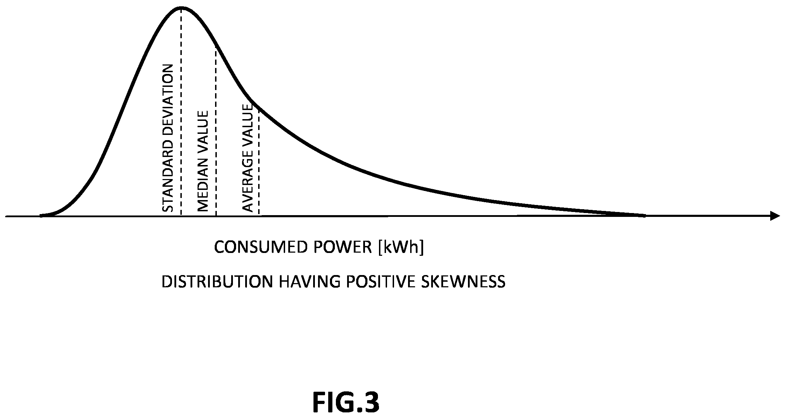

Here, a distribution modeled by the modeling unit 20 is illustrated in FIG. 3. This distribution is a distribution having a positive skewness, and |average value - median value| < standard deviation. The distribution modeled by the modeling unit 20 can be displayed on the display device such as the display.

The schedule adjustment unit 30 adjusts an operation schedule of the energy demand facility X so as to reduce an energy consumption amount, based on the distribution modeled by the modeling unit 20 and a predetermined condition.

Examples of the predetermined condition include adjusting the operation schedule of the energy demand facility X so as to reduce an average value of the modeled distribution. Examples of reducing the average value of the modeled distribution include adjusting the operation schedule of the energy demand facility X so as to reduce dispersion of the modeled distribution.

Specifically, the schedule adjustment unit 30 adjusts each operation schedule so as to link the plurality of energy consumption devices X1. Here, adjusting the operation schedule may include controlling the plurality of energy consumption devices X1 in cooperation or may include outputting the operation schedule of each of the plurality of energy consumption devices X1. In addition, the operation schedule may include adjusting a test schedule in the test facility.

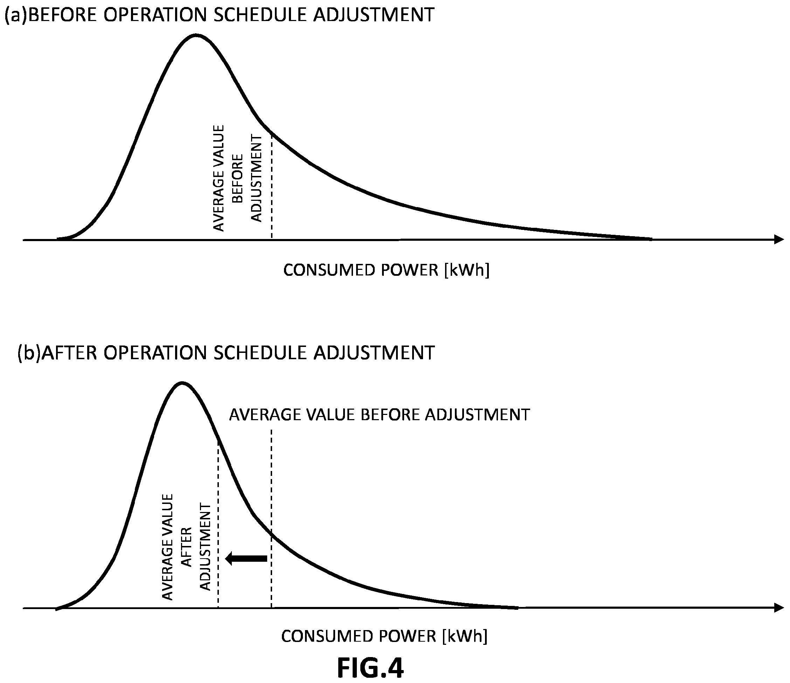

By adjusting the operation schedule by the schedule adjustment unit 30, the dispersion of the distribution modeled by the modeling unit 20 becomes small, and an average value of the consumed energy in the energy demand facility X decreases, as illustrated in FIG. 4. An operation schedule after adjustment by the schedule adjustment unit 30, a frequency distribution obtained from the operation schedule after the adjustment, a distribution obtained by modeling the frequency distribution, an average value of consumed energy, a reduction amount of the consumed energy, or the like can be displayed on the display device such as the display.

### <Effects of the present embodiment>

According to the energy management system 100 of the present embodiment configured as described above, the frequency distribution indicating the frequency of the energy consumption amount in each cluster is modeled into the at least one distribution having a positive skewness, and the operation schedule of the energy demand facility is adjusted so as to reduce the dispersion of the modeled distribution, so that the average value of the consumed energy in the energy demand facility can be reduced. As a result, energy saving in the energy demand facility can be realized.

### <Other embodiments>

For example, the operation schedule adjusted by the schedule adjustment unit 30 of the embodiment may be configured to be customized by a user.

In adjusting the operation schedule, an environmental factor such as weather, a customer factor such as product order, or a user factor such as a worker who conducts a test may be added to an input variable.

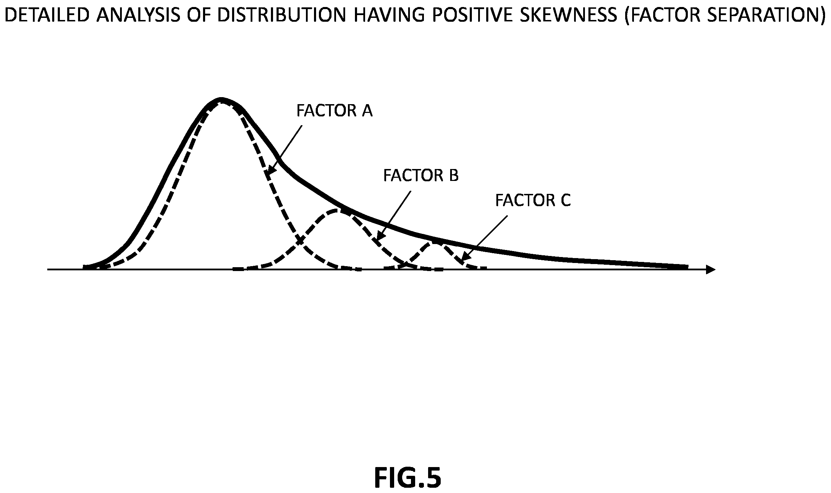

Here, as illustrated in FIG. 5, when a distribution having a positive skewness modeled by the modeling unit 20 is analyzed (factor separation), it has been found that the distribution is decomposed into a plurality of factors. In particular, it has been found that air conditioning (cooling facility) is dominant in the positive skewness portion, and for example, "factor B" and/or "factor C" in FIG. 5 can be reduced by optimizing a set temperature and/or a flow rate of cooling water of the cooling facility in the energy demand facility X.

Therefore, adjusting the operation schedule by the schedule adjustment unit 30 or customizing the operation schedule includes adjusting the set temperature of the cooling water of the cooling facility in the energy demand facility X. Specifically, the schedule adjustment unit 30 adjusts the operation schedule of the cooling facility using a psychrometric chart. In addition, the schedule adjustment unit 30 predicts a load of the cooling facility and adjusts the operation schedule of the cooling facility using the psychrometric chart.

In the energy demand facility X such as the test facility, a ratio between cooling with cooling water from the cooling facility such as a chiller and heating with steam from a heating facility such as a boiler is adjusted in consideration of heat generation of a test piece or the like in the test facility, so that a test environment temperature and/or humidity in the test facility falls within a predetermined test acceptable temperature and/or humidity.

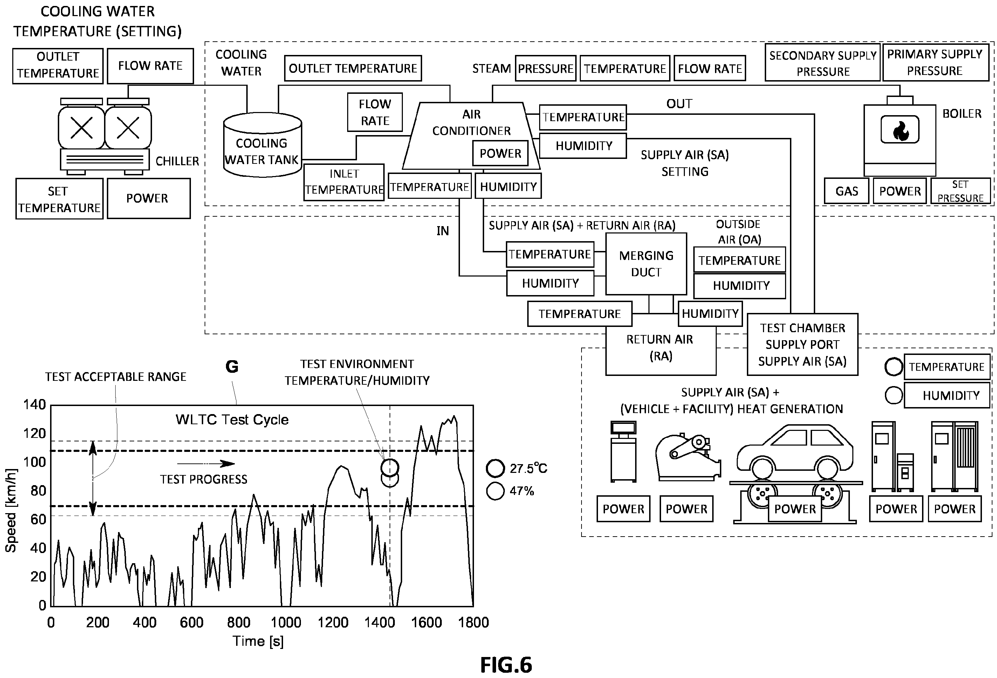

Here, in order to make it easy for the user to adjust the set temperature of the cooling water or to make it easy for the user to confirm whether the adjustment of the set temperature of the cooling water is appropriate, as illustrated in FIG. 6, the energy management system 100 includes a screen display unit that displays, on the display, numerical values such as temperature, humidity, pressure, a flow rate, power, and the like of each unit in the energy demand facility X together with a system configuration diagram. FIG. 6 illustrates an energy demand facility having a test facility for performing a vehicle test and an air conditioning facility (including a cooling facility and a heating facility) for adjusting temperature and/or humidity of a test environment of the test facility. Note that the vehicle test includes a test for not only a finished vehicle but also a part of a vehicle (for example, an engine, a transmission, a motor, a brake, a battery, a fuel cell, and the like), and examples of the vehicle include an engine vehicle, a hybrid vehicle, an electric vehicle, and a fuel cell vehicle.

In addition, the screen display unit can display, on the display, a current test environment temperature and/or humidity of the test facility (here, a test space of a test piece) together with a progress status of the test, for example, on a graph G. This screen display unit displays, on the graph G, an acceptable range (for example, an upper limit value and a lower limit value) of temperature and/or humidity together with the current test environment temperature and/or humidity of the test facility. Here, the graph G illustrated in FIG. 6 is a graph of a WLTC test, where a horizontal axis represents time and a left vertical axis represents a vehicle speed. In addition, the test environment temperature/humidity can be displayed with a right vertical axis of the graph G of FIG. 6 as temperature/or humidity.

Note that the screen display unit may display, for example, a graph of a current temperature and/or humidity of the test facility (here, the test space of the test piece) together with the progress status of the test without displaying, on the display, the numerical values such as the temperature, humidity, pressure, flow rate, and power of each unit in the energy demand facility X together with the system configuration diagram.

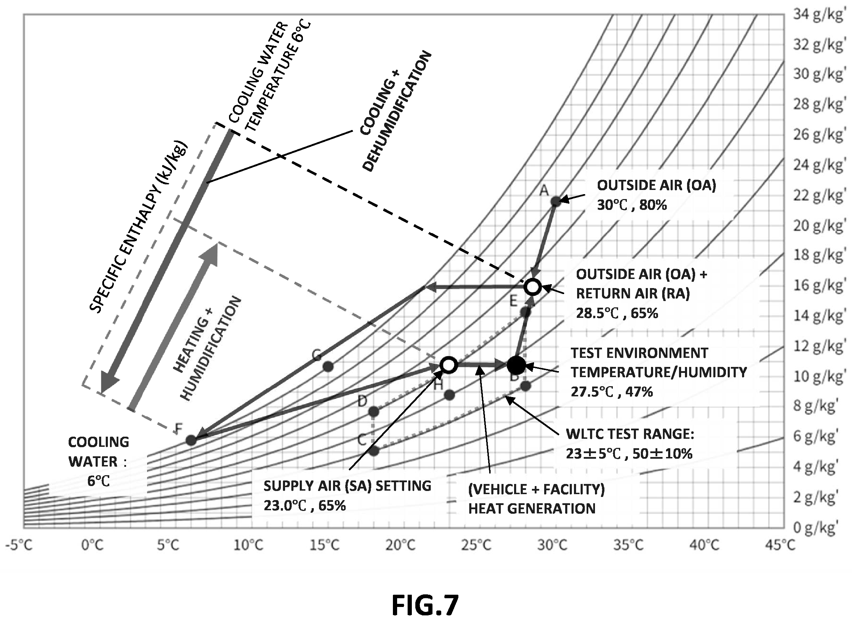

Further, the screen display unit can display at least one of a test environment temperature/humidity, an outside air temperature/humidity, a cooling water temperature, or an enthalpy change on a psychrometric chart in real time according to test (test sequence) progress, as illustrated in FIG. 7.

The following are displayed on the psychrometric chart of FIG. 7.
"Test acceptable range (WLTC test range, e.g., temperature 23 ± 5°C, humidity 50 ± 10%)",
"Outside air (OA) (e.g., temperature 30°C, humidity 80%)",
"Supply air (SA) setting (e.g., temperature 23°C, humidity 65%)",
"Test environment temperature/humidity (= supply air (SA) + (vehicle + facility) heat generation, e.g., temperature 27.5°C, humidity 47%)",
"Outside air (OA) + return air (RA) (e.g., temperature 28.5°C, humidity 65%)", and
"Cooling water temperature setting (e.g., temperature 6°C)"

An arrow or a straight line may be displayed on the psychrometric chart so as to connect the respective indication points described above. Furthermore, an enthalpy change of cooling and dehumidification by the cooling facility and an enthalpy change of heating and humidification by the heating facility are displayed on the psychrometric chart. Here, these enthalpy changes are indicated by arrows, for example.

By displaying FIG. 7 in this manner, an energy amount (enthalpy) related to the test environment conditions can be visualized on the psychrometric chart.

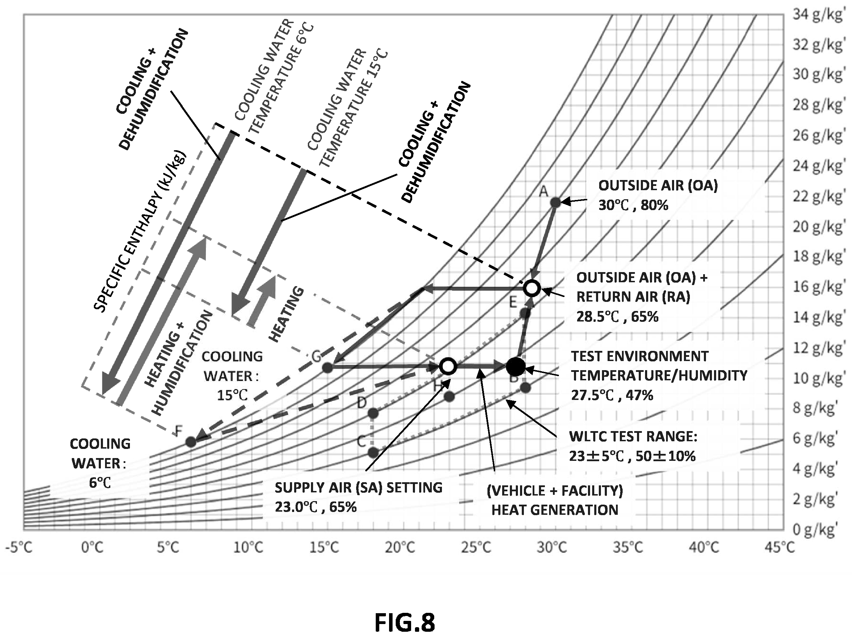

FIG. 8 illustrates a diagram when the "cooling water temperature setting" is changed from 6°C to 15°C (setting change diagram). Also in this figure, at least one of a test environment temperature/humidity, an outside air temperature/humidity, a cooling water temperature, or an enthalpy change can be displayed on a psychrometric chart. In FIG. 8, at least one of the test environment temperature/humidity, the outside air temperature/humidity, the cooling water temperature, or the enthalpy change before the setting change is superimposed and displayed together with at least one of the test environment temperature/humidity, the outside air temperature/humidity, the cooling water temperature, or the enthalpy change after the setting change, but the display method is not limited thereto.

By displaying FIG. 8 in this manner, it is possible to visualize an amount of change in energy when a setting parameter (cooling water temperature 6°C → 15°C) is changed. It can also be verified whether the setting value is suitable for the energy amount. Furthermore, it is possible to predict a test environment temperature/humidity when energy demand changes from the current state. Here, examples of items in which the energy demand changes include an outside air temperature/humidity due to a temporal change, a cooling water temperature due to a change in the outside air temperature, vehicle heat generation due to a change in a traveling speed of a vehicle as a test piece, and vehicle heat generation due to a change in a vehicle type (small displacement → large displacement).

The schedule adjustment unit 30 can also predict a load of the cooling facility according to a test cycle (here, WLTC) performed in the test facility, and adjust the operation schedule of the cooling facility using the psychrometric chart. Here, the schedule adjustment unit 30 predicts whether the load of the cooling facility increases or decreases according to the test cycle (here, WLTC), and adjusts the operation schedule (change schedule of the set temperature) of the cooling facility using the psychrometric chart in consideration of responsiveness (time constant) of temperature control. In addition, the schedule adjustment unit 30 can also reduce the load by increasing the set temperature of the cooling facility between the test cycle (here, WLTC) and the next test cycle (here, WLTC). Furthermore, since the load changes for each of a plurality of test chambers (test facilities), the schedule adjustment unit 30 can change the set temperature of the cooling facility for each of the plurality of test chambers (test facilities), and can change the set temperature of the cooling facility according to the number of operating test chambers (test facilities).

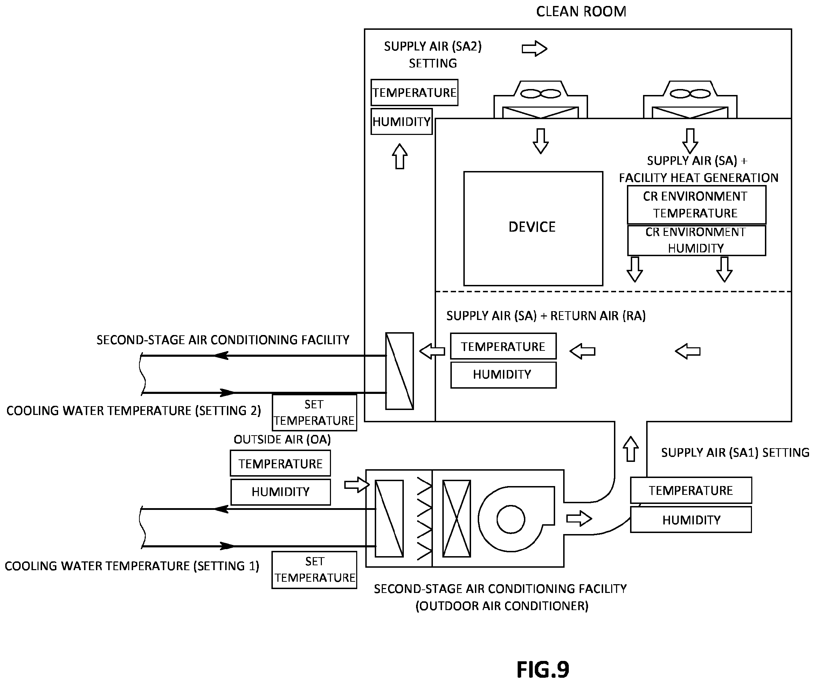

In the above description, the test facility for performing the vehicle test has been described. However, as illustrated in FIG. 9, a configuration may be employed in which the user easily adjusts the set temperature of the cooling water in the cooling facility of a clean room, or the user easily confirms whether the adjustment of the set temperature of the cooling water is appropriate.

Specifically, the energy management system 100 includes the screen display unit that displays, on the display, the numerical values such as the temperature, humidity, pressure, flow rate, and power of each unit in the energy demand facility X together with the system configuration diagram. FIG. 9 illustrates an energy demand facility including a first-stage air conditioning facility that supplies cooled supply air (SA1) to return air (RA) of the clean room (CR) and a second-stage air conditioning facility that cools the supply air (SA1) and the return air (RA).

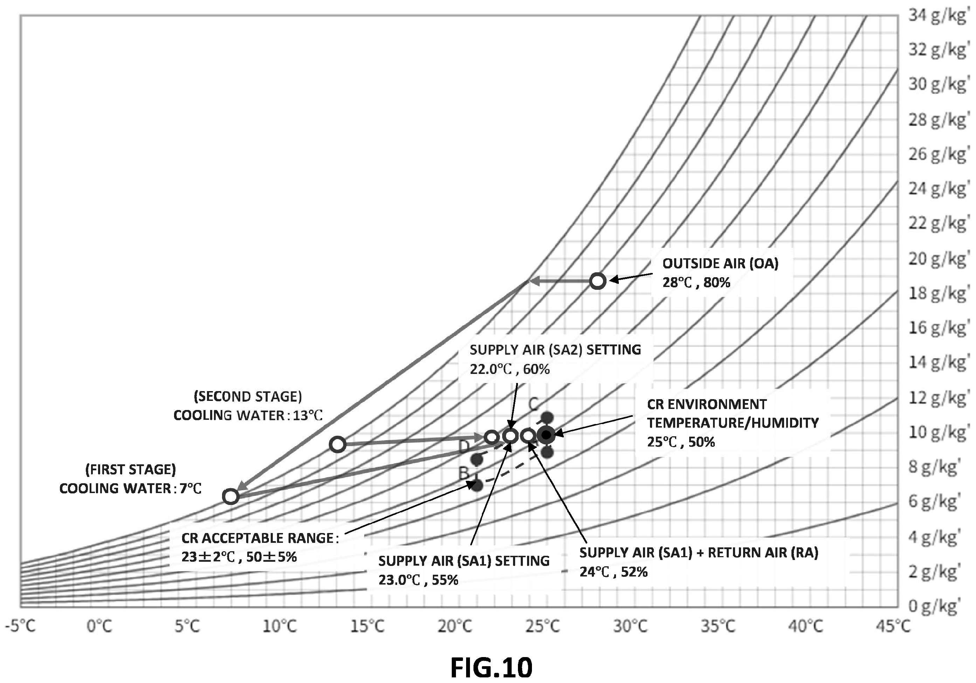

Further, as illustrated in FIG. 10, the screen display unit can display at least one of a CR environment temperature/humidity, an outside air temperature/humidity, a cooling water temperature, or an enthalpy change on a psychrometric chart in real time.

The following are displayed on the psychrometric chart of FIG. 10.
"CR acceptable range (e.g., temperature 23 ± 2°C, humidity 50 ± 5%)",
"Outside air (OA) (e.g., temperature 28°C, humidity 80%)",
"Supply air (SA1) setting (e.g., temperature 23°C, humidity 55%)",
"Supply air (SA2) setting (e.g., temperature 22°C, humidity 60%)",
"CR environment temperature/humidity (= supply air (SA) + facility heat generation, e.g., temperature 25°C, humidity 50%)",
"Supply air (SA1) + return air (RA) (e.g., temperature 24°C, humidity 52%)"
"Cooling water temperature setting 1 (for first-stage air conditioning facility) (e.g., temperature 7°C)", and
"Cooling water temperature setting 2 (for second-stage air conditioning facility) (e.g., temperature 13°C)"

When the "cooling water temperature setting 1 (of first-stage air conditioning facility)" and/or the "cooling water temperature setting 2 (of first-stage air conditioning facility)" is changed, the screen display unit can display at least one of the CR environment temperature/humidity, the outside air temperature/humidity, the cooling water temperature, or the enthalpy change on the psychrometric chart.

By displaying FIG. 10 in this manner, an energy amount (enthalpy) related to the clean room can be visualized on the psychrometric chart. In addition, it is possible to verify whether or not setting values of the two-stage air conditioning (the first-stage air conditioning facility and the second-stage air conditioning facility) are suitable for the energy amount. Furthermore, it is possible to predict a clean room temperature/humidity when an energy demand changes from the current state. Here, examples of items in which the energy demand changes include an outside air temperature/humidity due to a temporal change, a cooling water temperature due to an outside air temperature change, heat generation due to a change in an operation state of a facility, and/or heat generation due to a change in the number of workers.

In addition, the schedule adjustment unit 30 can predict a load of the cooling facility according to a production plan and/or entrance and exit of people in the clean room, and adjust the operation schedule of the cooling facility using the psychrometric chart. Here, the schedule adjustment unit 30 predicts whether the load of the cooling facility increases or decreases according to the production plan and/or the entrance and exit of the people, and adjusts the operation schedule (change schedule of the set temperature) of the cooling facility using the psychrometric chart in consideration of responsiveness (time constant) of temperature control.

The air conditioning facility of the test facility for performing the vehicle test described above may perform two-stage air conditioning similarly to the air conditioning facility of the clean room described above. On the other hand, the air conditioning facility of the clean room described above may perform one-stage air conditioning similarly to the air conditioning facility of the test facility for performing the vehicle test.

In addition, various modifications and combinations of the embodiments may be made without departing from the gist of the present invention.

### Industrial Applicability

According to the present invention, energy saving can be realized by focusing on a frequency distribution indicating frequency of an energy consumption amount in an energy demand facility.

### Reference Signs List

- 100: energy management system
- X: energy demand facility
- X1: energy consumption device
- 10: clustering unit
- 20: modeling unit
- 30: schedule adjustment unit

## Claims

1. An energy management system that manages consumed energy in an energy demand facility, the energy management system comprising:
a clustering unit that clusters a past energy consumption amount of the energy demand facility into a plurality of clusters based on a predetermined condition;
a modeling unit that models a frequency distribution indicating frequency of the energy consumption amount in each cluster into at least one distribution having a positive skewness; and
a schedule adjustment unit that adjusts an operation schedule of the energy demand facility so as to reduce dispersion of the modeled distribution.

2. The energy management system according to claim 1, wherein the clustering unit clusters the past energy consumption amount into the plurality of clusters by dividing the past energy consumption amount for each predetermined unit period.

3. The energy management system according to claim 1 or 2, wherein
the energy demand facility includes a plurality of energy consumption devices, and
the schedule adjustment unit adjusts an operation schedule of each of the plurality of energy consumption devices.

4. The energy management system according to any one of claims 1 to 3, wherein
the energy demand facility includes a cooling facility, and
the schedule adjustment unit adjusts an operation schedule of the cooling facility using a psychrometric chart.

5. The energy management system according to claim 4, wherein the schedule adjustment unit predicts a load of the cooling facility and adjusts the operation schedule of the cooling facility using the psychrometric chart.

6. The energy management system according to any one of claims 1 to 5, wherein the distribution having a positive skewness includes a power-law distribution having a median value smaller than an average value.

7. An energy management method for managing consumed energy in an energy demand facility, the energy management method comprising:
clustering a past energy consumption amount of the energy demand facility into a plurality of clusters based on a predetermined condition;
modeling a frequency distribution indicating frequency of the energy consumption amount in each cluster into at least one distribution having a positive skewness; and
adjusting an operation schedule of the energy demand facility so as to reduce dispersion of the modeled distribution.

8. An energy management program for managing consumed energy in an energy demand facility, the energy management program causing a computer to include:
a function as a clustering unit that clusters a past energy consumption amount of the energy demand facility into a plurality of clusters based on a predetermined condition;
a function as a modeling unit that models a frequency distribution indicating frequency of the energy consumption amount in each cluster into at least one distribution having a positive skewness; and
a function as a schedule adjustment unit that adjusts an operation schedule of the energy demand facility so as to reduce dispersion of the modeled distribution.
